# EUROPEAN PATENT SPECIFICATION

(11) **EP 3 743 465 B1**
(45) Date of publication and mention of the grant of the patent: **11.05.2022**
(21) Application number: 18759724.0
(22) Date of filing: 06.06.2018
(51) Int. Cl.: C08J 11/10, C08L 19/00, C08L 9/06

(54) **RECYCLING OF VULCANIZED RUBBER PRODUCTS**
RECYCLING VON VULKANISIERTEN GUMMIPRODUKTEN
RECYCLAGE DE PRODUITS EN CAOUTCHOUC VULCANISÉ

(30) Priority: 26.01.2018 HU 1800031
(43) Date of publication of application: 02.12.2020
(73) Proprietor: RECA BLEND KFT., 2700 Cegléd (HU)
(72) Inventor: OPRA, László Lajos, 2700 Cegléd (HU); SZABÓ, József, 2700 Cegléd (HU); KOVÁCS, László, 2700 Cegléd (HU)
(74) Representative: Danubia Patent & Law Office LLC
(86) International application number: PCT/HU2018/050025
(87) International publication number: WO 2019/145743

(56) References cited:
- EP-A1- 1 130 050
- CN-A- 102 775 634
- JP-A- 2003 128 843
- DATABASE WPI Week 201031 Thomson Scientific, London, GB; AN 2010-E77459 XP002785882, & CN 101 696 285 A (XUZHOU VOCATIONAL COLLEGE IND TECHNOLOGY) 21 April 2010 (2010-04-21)
- DATABASE WPI Week 201643 Thomson Scientific, London, GB; AN 2016-098843 XP002785883, & CN 105 295 150 A (JI G) 3 February 2016 (2016-02-03)

## Description

### Technical Field of the Invention

The present invention relates to a process for the recycling of vulcanized rubber-containing (elastomeric) products. The invention also relates to a vulcanized rubber-containing (elastomeric) product and a process for producing these.

### The technical background

Post-use recycling of vulcanized rubber containing (elastomeric) products, such as vulcanized rubber products, such as conveyor belts and tires, is an important environmental challenge. This is particularly true for tires needed by the automotive industry, where tens of thousands tons of waste tires are produced every year in the world.

Processes currently used for the processing of used tires generally consist of chopping and grinding the used tire, and physically removing the built-in parts such as metallic cord, synthetic fabric and the like. The resulting rubber grind can be processed in two different ways.

According to one of these, the rubber grind is subjected to pyrolysis, i.e., full combustion for energy gain. The disadvantage of the solution is that it is environmentally polluting and dangerous (WO2012108751, WO9908849).

Alternatively, the rubber grind is mixed with a binder and optionally other excipients and used for secondary purposes. Examples include rubber bricks, roofing tiles, sports court casings, playground casings, stall casings, insulating boards, noise barriers and the like. The disadvantage of the solution is that it has high costs since the binder used contains a relatively expensive polyurethane based resin (WO2012111627).

U.S. Patent No. 6,207,723 B1 discloses a rubber composition comprising rubber recycled together with non-vulcanized fresh rubber and/or thermoplastic resin. For the production of recycled rubber, vulcanized rubber is subjected to heat and shear stress, whereby the degree of crosslinking is adjusted to 1/20 to 1/4. The recycled rubber can only be used in small quantities in the composition described.

U.S. Patent No. 5,770,632 discloses the recycling of sulfur vulcanized elastomeric material, wherein as accelerating agent for reducing the degree of crosslinking zinc salts of thiocarbamates and zinc salts of dialkyl dithiophosphates, 2-mercaptobenzothiazole or derivatives thereof, thiurames, guanidines, 4,4'-dithiomorpholine and sulfonamides, with a zinc oxide activator are used. Decreasing of the curing is performed at temperatures below 70 °C. The resulting recycled elastomeric material, mixed with fresh ingredients, can be applied to produce tire and similar products. The disadvantage of the process is that the resulting recycled material can be used only in small amounts, usually up to 30% by weight, in the production of new vulcanizates.

EP 2 658 907 B1 describes the processing of tires and other plastics using hydrocarbons with high boiling point. The resulting products can be used for secondary purposes, such as fillers.

US 2010148435 A1 discloses the de-vulcanization of vulcanized rubber, whereby the vulcanized rubber is chopped, size- and temperature-homogenized by kneading, and then subjected to non-destructive mechanical force. The disadvantage of the process is that the applied heat treatment does not complete devulcanization.

WO 2010/020987 A1 discloses the reprocessing of vulcanized elastomeric materials by applying a shearing force in the presence of a de-vulcanization-promoting composition, said composition comprising (xi) a sulfide bond decomposing promoter agent selected from the group comprising amines, sulfides and derivatives thereof; (xii) a material providing for acidic medium selected from the group comprising organic acids and acid-anhydrides, (xiii) a free radical stabilizing agent selected from the group comprising oxidizing agents, (xiv) a redox reaction promoter material selected from the group comprising metal salts, and (xv) an agglomeration inhibitor of elastomeric material selected from polar sorbents. According to the solution complex chemical materials, such as mercaptobenzothiazole, hexamethylene tetramine and N-cyclohexyl-2-benzothiazole sulfenamide, and various metal oxides such as Fe₃O₄, ZnO₂ and MnO₂, and organic acids such as tartaric acid and oxalic acid are used. In addition, the process is carried out at controlled pH.

JP2003128843 A discloses a process for recycling tires, where the used raw rubber is mixed with a diene rubber, and exposed to shear force. The resulting material is powdered and de-sulfurizec

CN101696285 A relates to a vulcanizable rubber composition comprising reclaimed tire waste rubber powder, butadiene/styrene rubber and various additives. The reclaimed waste rubber powder is obtained by adding 100-30-meshed waste rubber powder with modifying agent p-tert.-butylphenol formaldehyde resin and high-temperature chemical disintegrator into screw extruder, and heating the mixture. The reclaimed waste rubber powder is mixed other rubbers such as butadiene/styrene copolymer. A vulcanizing agent like sulfur powder, vulcanization accelerant, vulcanization activator like zinc oxide and stearic acid are added into the mixed rubber material. The obtained rubber material can be reused.

EP1130050 A1 describes in Table 2 a rubber composition comprising reclaimed rubber powder, SBR, a vulcanizing agent and various additives. The reclaimed rubber composition can be reused.

One of the drawbacks of the known solutions is that they have a detrimental effect on the environment, or require large quantities of expensive and special chemicals, or the recycled rubber can only be used in small quantities.

A further disadvantage of the known processing methods is that they do not allow the rubber industry use of the processed rubber grind, i.e., to be vulcanized again. Therefore, the known processing methods cannot be considered to be recycling processes. They remove significant amount of raw material from the rubber industry, which is to be replaced by new rubber and/or artificial rubber.

For this reason, the demand of rubber industry for rubber and/or artificial rubber continues to grow. This demand can only be met by increasing the natural rubber production and increasing the artificial rubber production. The former severely burdens natural forests and plantations, while the latter requires an environmentally polluting industrial process. Both are environmentally burdensome and costly solutions.

It is not known from the prior art to allow the rubber industry to use rubber grind resulting from the processing of used tires, such as the production of tires and/or other rubber products, i.e. the recycling of used tires.

Recently, the world market price for natural rubber and the most commonly used artificial artificial rubbers has gone up considerably. Therefore, an increasing demand is experienced for the development of a process suitable for the rubber industry recycling of used tires.

A long-standing requirement is also to develop a process suitable for completely de-vulcanizing a vulcanized rubber (elastomeric) product.

### The problem to be solved

It is an object of the present invention to provide a process allowing for the rubber industry recycling of vulcanized rubber (elastomeric) products using a process comprising a de-vulcanizing step.

### The solution according to the invention

It has been discovered that the disadvantages of known processes for treating of used tires and/or other rubber products do not solve the chemical decomposition of the rubber vulcanization, i.e. the reversing of the vulcanization process. For the rubber industry application of the rubber granules obtained during the processing, complete de-vulcanization is required.

It has been found that the vulcanization can be chemically cleaved, when the rubber grind is exposed to a shear force determined in the presence of a weak base and a polymer additive.

### Summary of the Invention

The present invention relates to a process for the recycling of used vulcanized rubber (elastomeric) products, such as tires and/or other rubber products, comprising the step of exposing a rubber grind obtained from the processing of the used vulcanized rubber (elastomeric) products, in the presence of a weak base and a butadiene/styrene copolymer, and one or more additives to a shear force of at least 15 to 25 MPa.

The present invention furthermore relates to a vulcanizable material composition comprising a rubber and/or synthetic resin and, optionally, one or more rubber industry additives, said material composition being obtainable by the process according to the present invention.

The invention furthermore relates to the use of the material composition according to the invention for the manufacture of a tire or other rubber product.

The invention furthermore relates to a tire or other rubber product, obtainable by vulcanizing the material composition according to the present invention.

The invention furthermore relates to a process for the production of a tire or other rubber product, said process comprising the step of vulcanizing the material composition according to the invention.

### Detailed description of the invention

The terms used in this specification are to be understood as follows:
"processing of used vulcanized rubber containing (elastomeric) products" means the management of used tires and/or other rubber products by grinding and subsequent firing or by use for secondary purposes;
"recycling of used vulcanized rubber containing (elastomeric) products" means the management of used tires and/or other rubber products by treatment with the process according to the invention, and then by re-vulcanization as a tire and/or by use as other rubber product;
"tire" means a product obtained by vulcanizing and shaping a rubber blend containing rubber and/or artificial rubber and one or more conventional additives using a method known to a person skilled in the art, said product being applicable as a rubber tire in the motor vehicle industry;
"rubber product" means a product obtained by vulcanizing and shaping a rubber blend containing rubber and/or artificial rubber and one or more conventional additives using a method known to a person skilled in the art, said product being applicable as a product other than a tire;
"rubber blend" means a mixture containing rubber and/or artificial rubber and one or more conventional additives;
"re-rubber blend" means a composition containing a rubber grind treated with the method according to the present invention and one or more conventional additives;
"vulcanization" means the curing of a rubber blend by conventional heat treatment;
"re-vulcanization" means the vulcanization of a blend of a re-rubber according to the invention;
"base" means an alkaline material suitable for the chemical decomposition of the cured structure obtained by vulcanization;
"master blend" means the composition of a weak base and butadiene/styrene copolymer and one or more additives;
"shear force" means the force present at shear stress, where the shear stress is a force acting in the plane of the cross section of a body, in this case the particle size of the rubber grind, which unit of measure is MPa.

Accordingly, the invention relates to a process for the recycling of used vulcanized rubber (elastomeric) containing products, wherein the rubber grind obtained by processing used vulcanized rubber containing (elastomeric) products, such as tires and/or other rubber products, in the presence of a weak base and butadiene/styrene copolymer and one or more additive material is exposed to a shear force of at least 15 to 25 MPa.

According to the present invention, the used tire is any tire that can be produced by curing and shaping a rubber blend containing rubber and/or artificial rubber and one or more conventional additives using a method known in the art, and which can be used as a tire in the automotive industry.

According to the invention, the used rubber product is any rubber product that can be produced by vulcanizing and shaping of a rubber blend containing a rubber and/or artificial rubber and one or more conventional additives by a method known to a person skilled in the art, and which can be used as a product other than a tire.

Used rubber products can be, for example, a rubber conveyor belt, an air spring, a tube compensator, a technical hose, a conveyor belt, a drive belt, an extruded mold, a rubber thread, a plate product, an extruded product, a rubber insulated cable and the like.

For processing the used tire and/or rubber product, the tire and/or rubber product is cut, for example, to a size of 1 to 10 cm, in particular 2 to 8 cm. The cut tire and/or rubber product is ground, to a size for example, 1 to 8 mm, in particular 2 to 4 mm. Grinding can be carried out with any grinding device, for example, crown gear grinding rod-grinding, beating cross grinding, jet grinding and knife-hummer grinding equipment. The knife-hummer grinding apparatus is preferably applicable.

The particle size obtained by grinding is checked by standard grading, for example by shaking sieve grading.

The resulting grind is physically separated from the eventual components built in that in the case of a tire may be such as metal cord, synthetic fabric and the like (EP2877329B1).

By use of said processing a rubber grind is obtained, which can be used as a starting material for the process of the present invention.

To the rubber grind a master blend comprising the weak base, butadiene/styrene copolymer, and one or more additive is added.

The weak base is usually selected from alkaline earth metal hydroxides, for example Ca(OH)₂, Mg(OH)₂ and their mixtures, especially Ca(OH)₂.

The amount of the base is generally 5 to 50 weight%, especially 20 to 50 weight% based on the weight of the master blend.

As butadiene/styrene copolymer a butadiene/styrene copolymer containing 40 to 80 weight%, in particular from 50 to 60 weight% of styrene may be used. By varying the styrene content, the Mooney's viscosity of the copolymer can be set within a wide range of limits. Preferably, a butadiene/styrene copolymer having Mooney's viscosity ranging from 40 to 80 Mooney degrees can be used. Measurement of Mooney viscosity can be accomplished using a Mooney shear disc viscometer, by a measurement method widely used in the rubber industry to determine the viscosity and apparent viscosity of the mixtures.

The amount of the butadiene/styrene copolymer generally ranges from 2 to 40 weight%, in particular from 10 to 30 weight% based on the weight of the master blend.

The master blend also contains various additives, for example, plasticizers, lubricants, and the like.

As plasticizer bitumen and an inorganic plasticizer, such as Na₂CO₃ and mixtures thereof can be used.

The applicable lubricants include various soaps, in particular Na-stearate, Ca-stearate, Zn-stearate, and mixtures thereof.

One or more of the above additives may be used. The amount of the additive is from 10 to 70 weight%, in particular 20 to 60% by weight, based on the weight of the master blend.

The amount of master blend is 5-25 weight%, especially 8-15 weight%, based on the rubber grind.

The rubber grind and the master blend is homogenized by stirring at a temperature of 15 °C to 50° C, in particular 25 °C to 30 °C and under normal pressure for 10 minutes to 3 hours, especially for 30 minutes to 2 hours.

The homogenized mixture is subjected to a shear force. The shear force applied exceeds the original tensile strength of the rubber. Accordingly, the applied shear force is at least 15 to 25 MPa, in particular at least 18 to 20 MPa, where the preferred value is 25 to 35 MPa.

The function of the shear force is to expose the rubber to a force exceeding its tensile strength, thereby physically removing the polymeric chains. The original tensile strength of the rubber is 15 to 25 MPa, in particular 18 to 20 MPa. Tensile strength can be determined, for example, according to DIN 53504 and ISO 37 standards.

The shear force treatment can be achieved by any known means, for example by means of an extruder, a knife mixer, a roller, and the like.

In one embodiment of the invention, the homogenized mixture is introduced into an extruder and the shear force is exerted by passing through the slots. In order to exert the appropriate shear force, well-tightened extruder is used, whereby the slot distance, that is the distance between the screw ridge and the wall of the extruder is 0.02 to 0.05 mm, in particular 0.03 to 0.04 mm. During the passage through the extruder, the mixture temperature rises to 50-100 °C. The passage through the extruder is repeated 2 to 10 times. This can be accomplished by passing the mixture several times through the same extruder, or passing it through consecutive series of several extruders.

In another embodiment, a cooled-heated extruder is used and the temperature of the mixture is adjusted to 60-80 °C by cooling or heating.

The treatment with shear force will be performed until the formation of re-vulcanizable re-rubber blend (see below). To determine the endpoint of the treatment, a sample is obtained from the resulting mixture, it is vulcanized and checked for tensile strength of the mixture. In the case of tensile strength below the limit value, the mixture is returned to the extruder and the treatment with the shear force is repeated.

In one embodiment of the invention, after the shear force is applied, the treated mixture is homogenized again at 30 °C to 100 °C, especially 50 °C to 80 °C for 10 to 60 minutes, especially 15 to 50 minutes. The repeated homogenization can be accomplished by passing between a pair of rolls or by mixing. For the passage between the pair of rolls, preferably a roller having a slot of 0.05 x 20 mm, preferably 0.08 x 15 mm, is used, wherein the difference between the roll speeds, i.e. the friction value is 1.05 to 3.5, preferably 1.5 to 3.2.

In another embodiment of the invention, the resulting mixture may optionally be filtered. This can be accomplished after applying the shear force and/or after the repeated homogenization. The filtration is carried out in the usual manner. According to one embodiment of the invention, the filtration is carried out using a metal mesh screen having a puncture of 0.5 to 1.5 mm, preferably 0.8 to 1.0 mm.

After the treatment with shear force, a re-rubber blend is obtained, which shows a great similarity in its physico-chemical properties to the properties of the conventional rubber blends. Accordingly, the re-rubber blend can be vulcanized in the conventional manner, and can be processed into tires or other rubber products. The physical properties of the thus obtained re-vulvanized rubber are the same as, or at least approximate to, the physical properties of the original vulcanizates. Examples of such physical properties include Shore hardness, which value is 58 to 63 Sh° (for the original vulcanizates it is 65 to 70 Sh°), where the measuring method is DIN 53505, ISO 48; the tensile strength, which value is 15 to 17 MPa (for original vulcanizates it is 18 to 20 MPa), where the measuring method DIN 53504, ISO 37; elongation at breakage, which value is 500 to 600 % (for original vulcanizates it is 550 to 650%), where the measuring method DIN 53504, ISO 37.

Without wishing to be bound to a particular theory, it is assumed that the crosslinking structure formed by the original vulcanization disintegrates by the combined application of the base and the shear force. In particular, the long polymer chains break into shorter chains and the sulfur-sulfur bridges between the chains (¬S¬ S¬) open. This can also be considered as the reversal of the vulcanization process, as a result of which, by the treatment according to the present invention, a blend physically and chemically similar to the original rubber blend prior to the vulcanization, so-called re-rubber blend can be obtained from the used tire and/or rubber product. The re-rubber blend can be used as a rubber industry starting material that is it can be converted into tires or other rubber products by conventional re-vulcanization.

The re-rubber blend contains the residues of the master blend and the residues of rubber additives introduced with the rubber grind. However, optionally the re-rubber blend may be mixed with various rubber additives, such as rubber industry additives conventional for rubber blends.

Examples of rubber industry additives include activators, plasticizers, sulfur and sulfur donors, soot, anti-aging agents, sunscreen agents, accelerators, and the like. Examples of activators include metal oxides, in particular zinc oxide. Examples of plasticizers include sodium carbonate. Examples of anti-aging inhibitors include antioxidants, phenolnaphthylamines, especially aldo alpha naphthylamine, phenyl alpha naphthylamine, phenyl beta naphthylamine; mono- and multicyclic phenols, especially 2,6-di-tert-butyl-4-methylphenol, styrenated phenols, 2,2'-methylene bis(4-methyl-6-tertbutylphenol), 2,2'-methylene bis(4-methyl-6-cyclohexylphenol); thiophenols, in particular 4,4'thio bis(3-methyl-6-tert-butylphenol) and the like. Examples of sunscreen products include dialkyl or alkylaryl phenylenediamines such products branded as Protektor, Antilux or Okerin. Examples of accelerators include dithiocarbamates, xanthans, thiurams, benzothiazoles, benzothiazylsulfonamides and dithioureas.

The amount of rubber industry additives is generally in the range of 2 to 6 weight%, especially 3 to 5 weight%.

In one embodiment, in the method according to the invention the following steps are taken:
¬ used tires and/or other rubber products are cut and milled to a size of 2 to 4 mm for the production of a rubber grind,
¬ to the rubber grind a master blend containing a weak base, butadiene/styrene copolymer, and one or more additives are added,
¬ the resulting mixture is homogenized at 15 to 51 °C for 10 minutes to 2 hours to produce a homogenized mixture,
¬ the homogenized mixture is passed through a well-tightened extruder at 50 °C to 100 °C,
¬ the passage through the extruder is optionally repeated 2 times to 10 times,
¬ the re-rubber blend lead from the extruder is homogenized in a roll to produce a homogenized re-rubber blend, and
¬ to the homogenized re-rubber blend, optionally one or more rubber industry additives are added to produce a re-vulcanizable re-rubber blend.

The invention relates to a mixture of re-vulcanizable material composition comprising rubber and/or synthetic rubber and, optionally, one or more rubber industry additives, said material composition being obtainable by the process of the present invention.

The invention also relates to the use of the material composition according to the invention for the manufacture of a tire or other rubber product.

The re-vulcanization of the re-rubber blend is carried out using the conventional vulcanization process (Rubber Industry Manual, Volume I, Editor-in-Chief, Dr. László Bartha, Taurus Omikk, Budapest, 5.8, p. 394 to 411).

For example, in order to re-vulcanize the re-rubber blend, the desired rubber industry additives are added to the re-rubber blend, the mixture is homogenized on a roll and vulcanised at a desired temperature in the vulcanization press. In order to determine the end point of vulcanization, a sample from the rubber product is taken, and the tensile strength of the product is checked.

By the re-vulcanization of the re-rubber blend, it is possible to produce tires and other rubber products, such as rubber conveyor belts, an air spring, a pipe compensator, a technical hose, a conveyor harness, a drive belt, an extruded mold, a rubber string, a plate product, an extruded product, rubber insulated cables and the like.

The invention also relates to a tire or other rubber product, which can be produced by vulcanizing the material composition according to the present invention.

The invention further relates to a method for producing a tire or other rubber product comprising the step of vulcanizing a material composition according to the invention.

The process according to the invention can be practiced in conventional equipment. Examples include containers, dispensers, grinders, shredders and/or granulators, mixers, extruders, delivery devices, and the like.

The device suitable for re-vulcanizing of the re-rubber blend is identical with the conventional vulcanizing apparatus. Such a device includes, for example, a hydraulic press tool equipped with heatable plates, which includes the vulcanization tool of the desired size.

The invention will be further illustrated by the following examples without limiting the scope of the present invention thereto.

### Example 1: Preparation of a master blend

To prepare a master blend necessary for 90 kg tire grind, 3 kg of Ca(OH)₂, 2 kg of bitumen, 2 kg of butadiene/styrene copolymer granules containing 60 weight% of styrene, and 3 kg of Na₂CO₃ is mixed, and the mixture is stirred at ambient temperature for 1 hour.

### Example 2: Preparation of master blend

To produce a master blend necessary for 90 kg tire grind, 0.5 kg of Mg(OH)₂, 5 kg of bitumen, 2.5 kg of butadiene/styrene copolymer granules containing 40 weight% of styrene and 2 kg of Na₂CO₃ is mixed, and the mixture is stirred at ambient temperature for 40 minutes.

### Example 3: Production and re-vulcanization of re-rubber blend

The master blend and tire grind according to Example 1 was filled into a single screw extruder with a slot distance of 0.03 mm and dispersed for 40 minutes at 68 °C, then passed through a friction grade 1.2 roller over a period of 30 minutes. The resultant rubber blend was blended to homogeneity with 1 weight% sulfur, 1 weight% mercaptobenzthiazole and 0.1 weight% soot, and vulcanized at 170 °C for 5 minutes at a pressure of 160 bar in a press oven apparatus.

### Example 4: Production and re-vulcanization of re-rubber blend

The master blend and tire grind according to Example 2 was filled into a single screw extruder with a slot distance of 0.045 mm and dispersed for 30 minutes at 60 °C and passed through a friction grade 1.2 roller over a period of 30 minutes. The resulting re-rubber blend was vulcanized as described in Example 3.

### Example 5: Production and re-vulcanization of re-rubber blend (using an extruder other than well-tightened extruder) (Comparative Example)

The mixture (master blend and rubber grind) as described in Example 4 was filled into a single-screw extruder (slot distance greater than 0.1 mm), dispersed for 30 minutes at 60 °C, and passed through a 1.2 friction value roller over a period of 30 minutes. The resultant re-rubber blend was blended to homogeneity with 1 weight% sulfur, 1 weight% mercaptobenziazole and 0.1 weight% soot, and vulcanized at 170 °C for 5 minutes at a pressure of 160 bar in a press oven apparatus.

### Example 6: Production and re-vulcanization of re-rubber blend (using a polymer other than butadiene/styrene copolymer) (Comparative Example)

In the same manner as in Example 1, a master blend was prepared and mixed with a rubber grind, except that polystyrene granules (rhenostyrol, manufacturer: Aikolon) were used instead of butadiene/styrene copolymer granules. With the resulting master blend a re-rubber blend was produced and it was re-extruded as described in Example 3.

### Example 7: The technical properties of the re-vulcanized rubber according to Examples 3-6.

| Physical property | Example 3 | Example 4 | Example 5 | Example 6 |
|---|---|---|---|---|
| hardness (Sh°) | 61.3 | 58.6 | 45-52 | 35-45 |
| tensile strength (MPa) | 16.3 | 15.2 | 1.5 | 1.2 |
| elongation at breakage (%) | 550 | 510 | 52 | 40 |

From the data in the table, it can be seen that the technical properties of the re-vulcanized rubber in Examples 3 and 4 according to the invention correspond to the properties of the conventional rubber blends.

The exact measurement of the hardness of the test sample obtained in Comparative Example 5 is difficult due to the high permanent deformation of the vulcanizate. The measured value fluctuated from 45 (Sh°) to 52 (Sh°). The tensile strength decreased to 1.5 MPa. The elongation at break just reached 52%, which showed a high level of uncertainty.

With the test sample obtained in Comparative Example 6, a further deterioration of the physical-mechanical data was observed. The hardness further deteriorated as compared to Example 5 from 35 (Sh°) to 45 (Sh°). The tensile strength was "only" 1.2 MPa. The tensile elongation became irrelevantly low, showing a value below 40%.

The solution according to the present invention allows economical and environmentally friendly disposal of second-hand tires and/or other rubber products, and their recycling in the rubber industry. The present invention therefore significantly reduces the environmental impact of used tires and/or other rubber products, while simultaneously reducing the demand for fresh raw materials for the rubber industry.

## Claims

1. A process for the recycling of used vulcanized rubber products comprising the step of exposing the rubber grind obtained by processing the used vulcanized rubber containing products, in the presence of a weak base selected from the group consisting of alkaline earth metal hydroxides, and butadiene/styrene copolymer and one or more additives to a shear force of at least 15 to 25 MPa, wherein the weak base, the butadiene/styrene copolymer and the one or more additives are added to the rubber grind in the form of a mixture, wherein the amount of the weak base in the mixture is from 5 to 50 weight%, the amount of the butadiene/styrene copolymer is 2-40 weight%, and the amount of one or more additives is 10 to 70 weight%.

2. The process according to Claim 1, wherein the weak base is selected from the group consisting of Ca(OH)₂, Mg(OH)₂ and mixtures thereof.

3. The process according to Claim 1 or 2, wherein the butadiene/styrene copolymer is a butadiene/styrene copolymer containing 40 to 60 weight% of styrene.

4. The process according to any one of Claims 1 to 3, wherein the one or more additives are selected from the group consisting of bitumen, Na₂CO₃ and mixtures thereof.

5. The process according to any one of Claims 1 to 4, wherein the mixture of the weak base, the butadiene/styrene copolymer, and one or more additives is mixed with the rubber grind in a quantity of from 5 to 25 weight%, and the resultant mixture is exposed in an extruder to a shear force of at least 15 to 25 MPa.

6. The process according to Claim 5, wherein a well-tightened extruder is used, wherein the extruder has a slot distance of 0.02 to 0.05 mm.

7. The process according to Claim 5 or 6, wherein the mixture is passed through the same extruder several times, or passed through a series of several extruders sequentially coupled.

8. The process according to any one of Claims 5 to 7, wherein a cooled-heated extruder is used and the temperature of the mixture is adjusted to 60-80 °C by cooling or heating.

9. The process according to any one of Claims 1 to 8, further comprising the step of mixing one or more rubber industry additives with a mixture obtained after treating under the shearing force, and then vulcanizing said resulting mixture.

10. The process according to any one of Claims 1 to 9, comprising the steps of:
¬ used tires and/or other rubber products are cut and milled to a size of 2 to 4 mm for the production of a rubber grind,
¬ to the rubber grind weak base, a butadiene/styrene copolymer, and one or more additives are added, optionally in the form of a master blend,
¬ the resulting mixture is homogenized at 15 to 51 °C for 10 minutes to 2 hours to produce a homogenized mixture,
¬ the homogenized mixture is passed through an extruder at 50 °C to 150 °C,
¬ the passage through the extruder is optionally repeated 2 times to 10 times,
¬ the re-rubber blend lead from the extruder is homogenized in a roll to produce a homogenized re-rubber blend, and
¬ to the homogenized re-rubber blend, optionally one or more rubber industry additives are added to produce are-vulcanizable re-rubber blend,
- the vulcanizable re-rubber blend is vulcanized.

## Patentansprüche

1. Verfahren zum Recycling von gebrauchten Produkten aus vulkanisiertem Gummi enthaltend den Schritt, bei dem das durch Aufarbeitung der gebrauchten vulkanisierten Gummi enthaltenden Produkte erhaltene Gummimahlgutes in Anwesenheit von einer schwachen Base ausgewählt aus der Gruppe bestehend aus Erdalkalimetallhydroxiden, und von Butadien/Styrol-Copolymer und eines oder mehrerer Zusatzstoffe einer Scherkraft von mindestens 15 bis 25 MPa ausgesetzt wird, wobei die schwache Base, das Butadien/StyrolCopolymer und der eine oder mehrere Zusatzstoffe dem Gummimahlgut in Form einer Mischung zugegeben werden, wobei die Menge der schwachen Base in der Mischung 5 bis 50 Gewichts.%, die Menge des Butadien/Styrol-Copolymers 2-40 Gewichts.%, und die Menge von einem oder mehreren Zusatzstoffen 10 bis 70 Gewichts.% beträgt.

2. Das Verfahren nach Anspruch 1, wobei die schwache Base aus der Gruppe bestehend aus Ca(OH)₂, Mg(OH)₂ und deren Mischung ausgewählt ist.

3. Das Verfahren nach Anspruch 1 oder 2, wobei das Butadien/Styrol-Copolymer ein Butadien/Styrol-Copolymer ist, welches 40 bis 60 Gewichts.% Styrol enthält.

4. Das Verfahren nach einem der Ansprüche 1 bis 3, wobei der eine oder mehrere Zusatzstoffe aus der Gruppe bestehend aus Bitumen, Na₂CO₃ und deren Mischung ausgewählt ist.

5. Das Verfahren nach einem der Ansprüche 1 bis 4, wobei die Mischung der schwachen Base, des Butadien/Styrol-Copolymers und eines oder mehrerer Zusatzstoffe mit dem Gummimahlgut in einer Menge von 5 bis 25 Gewichts.% vermischt wird, und die erhaltene Mischung in einem Extruder einer Scherkraft von mindestens 15 bis 25 MPa ausgesetzt wird.

6. Das Verfahren nach Anspruch 5, wobei ein fest angezogener Extruder verwendet wird, wobei der Extruder einen Spaltenabstand von 0,02 bis 0,05 mm besitzt.

7. Das Verfahren nach Anspruch 5 oder 6, wobei die Mischung mehrmals durch denselben Extruder oder durch mehrere nacheinander in einer Reihe verkoppelte Extruder gepresst wird.

8. Das Verfahren nach einem der Ansprüche 5 bis 7, wobei ein geheizter-gekühlter Extruder verwendet wird, und die Temperatur der Mischung durch Kühlung oder Heizung auf 60-80 °C eingestellt wird.

9. Das Verfahren nach einem der Ansprüche 1 bis 8, weiterhin enthaltend den Schritt des Vermischens eines oder mehrerer Zusatzstoffe für die Gummiindustrie mit einer Mischung, die nach der Behandlung mit Scherkraft erhalten wird, und dann Vulkanisieren der erhaltenen Mischung.

10. Das Verfahren nach einem der Ansprüche 1 bis 9, enthaltend die folgenden Schritte:
¬ gebrauchte Reifen und/oder andere Gummiprodukte werden bis einer Teilchengröße von 2 bis 4 mm zerkleinert und gemahlen, um ein Gummimahlgut zu erhalten,
¬ dem Gummimahlgut werden eine schwache Base, ein Butadien/Styrol-Copolymer, und ein oder mehrere Zusatzstoffe zugegeben, gegebenenfalls in Form einer Mei stermi schung,
¬ die erhaltene Mischung wird bei 15 bis 51 °C 10 Minuten bis 2 Stunden lang homogenisiert, um eine homogenisierte Mischung zu erhalten,
¬ die homogenisierte Mischung wird bei 50 °C bis 150 °C durch einen Extruder gepresst,
¬ das Pressen durch den Extruder wird gegebenenfalls 2- bis 10-mal wiederholt,
¬ die dem Extruder entnommene Re-Gummimischung wird in einem Walzwerk homogenisiert, um eine homogenisierte Re-Gummimischung zu erhalten, und
¬ der homogenisierten Re-Gummimischung werden gegebenenfalls ein oder mehrere Zusatzstoffe für Gummiindustrie zugegeben, um eine vulkanisierbare Re-Gummimischung zu erhalten,
- die vulkanisierbare Re-Gummimischung wird vulkanisiert.

## Revendications

1. Un procédé de recyclage de produits de caoutchouc vulcanisé usagés comprenant l'étape consistant à exposer le caoutchouc broyé obtenu par traitement des produits contenant du caoutchouc vulcanisé usagés, en présence d'une base faible choisie dans le groupe constitué par les hydroxydes de métaux alcalino-terreux et d'un copolymère de butadiène/styrène et d'un ou de plusieurs additifs à une force de cisaillement d'au moins 15 à 25 MPa, dans lequel la base faible, le copolymère butadiène/styrène et le ou les additifs sont ajoutés au caoutchouc broyé sous la forme d'un mélange, la quantité de la base faible dans le mélange étant de 5 à 50 % en poids, la quantité du copolymère butadiène/styrène étant de 2 à 40 % en poids, et la quantité d'un ou plusieurs additifs étant de 10 à 70 % en poids.

2. Le procédé selon la revendication 1, dans lequel la base faible est choisie dans le groupe constitué par Ca(OH)₂, Mg(OH)₂ et leurs mélanges.

3. Le procédé selon la revendication 1 ou 2, dans lequel le copolymère butadiène/styrène est un copolymère butadiène/styrène contenant 40 à 60 % en poids de styrène.

4. Le procédé selon l'une quelconque des revendications 1 à 3, dans lequel le ou les additifs sont choisis dans le groupe constitué par le bitume, Na₂CO₃ et des mélanges de ceux-ci.

5. Le procédé selon l'une quelconque des revendications 1 à 4, dans lequel le mélange de la base faible, du copolymère butadiène/styrène et d'un ou plusieurs additifs est mélangé avec le caoutchouc broyé en une quantité de 5 à 25 % en poids, et le mélange résultant est exposé dans une extrudeuse à une force de cisaillement d'au moins 15 à 25 MPa.

6. Le procédé selon la revendication 5, dans lequel une extrudeuse bien serrée est utilisée, l'extrudeuse ayant une distance de fente de 0,02 à 0,05 mm.

7. Le procédé selon la revendication 5 ou 6, dans lequel le mélange est passé à travers la même extrudeuse plusieurs fois, ou passé à travers une série de plusieurs extrudeuses couplées séquentiellement.

8. Le procédé selon l'une quelconque des revendications 5 à 7, dans lequel une extrudeuse chauffée refroidie est utilisée et la température du mélange est ajustée à 60-80 °C par refroidissement ou chauffage.

9. Le procédé selon l'une quelconque des revendications 1 à 8, comprenant en outre l'étape consistant à mélanger un ou plusieurs additifs de l'industrie du caoutchouc avec un mélange obtenu après traitement sous la force de cisaillement, puis à vulcaniser ledit mélange résultant.

10. Le procédé selon l'une quelconque des revendications 1 à 9, comprenant les étapes consistant à :
- des pneus et/ou d'autres produits en caoutchouc usagés sont coupés et broyés à une taille de 2 à 4 mm pour la production d'un caoutchouc broyé,
- au caoutchouc broyé, une base faible, un copolymère butadiène/styrène, et un ou plusieurs additifs sont ajoutés, éventuellement sous la forme d'un mélange maître,
- le mélange résultant est homogénéisé à 15 à 51 °C pendant 10 minutes à 2 heures pour produire un mélange homogénéisé,
- le mélange homogénéisé est passé à travers une extrudeuse à 50 °C à 150 °C,
- le passage à travers l'extrudeuse est éventuellement répété 2 fois à 10 fois,
- le mélange de re-caoutchouc provenant de l'extrudeuse est homogénéisé dans un rouleau pour produire un mélange de re-caoutchouc homogénéisé, et
- au mélange de re-caoutchouc homogénéisé, éventuellement un ou plusieurs additifs de l'industrie du caoutchouc sont ajoutés pour produire un mélange de re-caoutchouc re-vulcanisable,
- le mélange de re-caoutchouc vulcanisable est vulcanisé.
